(19) **Europäisches Patentamt / European Patent Office / Office européen des brevets**

(11) **EP 4 694 282 A1**

(12) **EUROPEAN PATENT APPLICATION**
published in accordance with Art. 153(4) EPC

(43) Date of publication:
**11.02.2026 Bulletin 2026/07**

(21) Application number: **23931446.1**

(22) Date of filing: **06.04.2023**

(51) International Patent Classification (IPC):
**H04W 24/02** $^{(2009.01)}$

(52) Cooperative Patent Classification (CPC):
**G06N 20/00; H04L 41/16; H04W 24/02**

(86) International application number:
**PCT/CN2023/086735**

(87) International publication number:
**WO 2024/207378 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventors:
- LIU, Min
  **Beijing 100085 (CN)**
- LIU, Zhengxuan
  **Beijing 100085 (CN)**

(74) Representative: **Dehns Germany Partnerschaft mbB**
**Theresienstraße 6-8**
**80333 München (DE)**

(54) **INFORMATION PROCESSING METHOD AND APPARATUS, AND COMMUNICATION DEVICE AND STORAGE MEDIUM**

(57) Provided in the embodiments of the present disclosure are an information processing method and apparatus, and a communication device and a storage medium. The information processing method may comprise: according to configuration information related to artificial intelligence (AI) and/or machine learning (ML) processing, determining occupancy information of a processing unit that executes the AI/ML processing.

S1110: determining occupancy information of processing unit(s) executing AI/ML processing based on configuration information related to AI/ML processing

Fig. 2A

EP 4 694 282 A1

**Description**

**TECHNICAL FIELD**

The present disclosure relates to the field of wireless communication technologies but is not limited to the field of wireless communication technologies, and in particular to an information processing method and apparatus, a communication device, and a storage medium.

**BACKGROUND**

With technological advancements, Artificial Intelligence (AI) and/or Machine Learning (ML) are being used to process data during wireless communications.

If AI/ML processing is required for wireless communications, and AI/ML processing is involved for the configuration information, occupancy of the processing unit must be considered, because the User Equipment (UE) has limited AI/ML processing capabilities.

**SUMMARY**

Embodiments of the present disclosure provide an information processing method and apparatus, a communication device, and a storage medium.

A first aspect of the embodiments of the present disclosure provides an information processing method, including:

determining, based on configuration information related to at least one of AI or ML processing, occupancy information of one or more processing units executing the at least one of AI or ML processing.

A second aspect of the embodiments of the present disclosure provides an information processing apparatus, including:

a processing module, configured to determine, based on configuration information related to at least one of AI or ML processing, occupancy information of one or more processing units executing the at least one of AI or ML processing.

A third aspect of the embodiments of the present disclosure provides a communication device, including a processor, a transceiver, a memory, and an executable program stored in the memory and executable by the processor, where the processor is configured to perform the information processing method provided in the first aspect when executing the executable program.

A fourth aspect of the embodiments of the present disclosure provides a computer storage medium, where the computer storage medium stores an executable program, and the executable program is configured to implement the information processing method provided in the first aspect when executed by a processor.

The technical solution provided by the embodiments of the present disclosure is as follows.

A terminal or network device determines the occupancy information of the processing unit(s) based on configuration information. This allows the terminal to disregard certain configuration information or request a new configuration timely when the processing unit(s) of the terminal is insufficient to support the required units, thereby ensuring high-quality execution of the configuration corresponding to the configuration information.

It should be understood that the general description above and the detailed descriptions below are merely examples and illustrative and do not limit the present embodiments.

**BRIEF DESCRIPTION OF THE DRAWINGS**

The accompanying drawings herein are incorporated into and constitute a part of this specification. They illustrate embodiments consistent with the present disclosure and, together with the description, serve to explain the principles of the embodiments of the present disclosure.

Fig. 1 is a schematic structural diagram of a wireless communication system according to an example embodiment;
Fig. 2A is a schematic flow diagram of an information processing method according to an example embodiment;
Fig. 2B is a schematic flow diagram of an information processing method according to an example embodiment;
Fig. 2C is a schematic flow diagram of an information processing method according to an example embodiment;
Fig. 2D is a schematic flow diagram of an information processing method according to an example embodiment;
Fig. 3 is a schematic structural diagram of an information processing apparatus according to an example embodiment;
Fig. 4 is a schematic structural diagram of a terminal according to an example embodiment; and
Fig. 5 is a schematic structural diagram of a network device according to an example embodiment.

DETAILED DESCRIPTION OF THE EMBODIMENTS

Example embodiments will be described in detail herein, as illustrated in the accompanying drawings. When the following description refers to the drawings, identical numerals in different figures represent identical or similar elements, unless otherwise indicated. The implementations described in the following example embodiments do not represent all the implementations consistent with the embodiments of the present disclosure. Rather, they are merely examples of apparatuses and methods consistent with some aspects of the embodiments of the present disclosure.

The terminology used in the embodiments of the present disclosure is for the purpose of describing specific embodiments only and is not intended to be limiting of the present disclosure. As used herein, the singular forms "a," "an," "the," and "said" are intended to include the plural forms, unless the context clearly indicates otherwise. It should also be understood that the term "and/or" as used herein refers to and encompasses any and all possible combinations of one or more of the associated items as listed.

It should be understood that although the embodiments of the present disclosure may use the terms "first," "second," and "third," etc. to describe various information, such information should not be limited to these terms. These terms are used solely to distinguish information of the same type from one another. For example, the first information may be referred to as the second information, and similarly, the second information may be referred to as the first information, without departing from the scope of the present disclosure. Depending on the context, the term "if" as used herein may be interpreted as "at the time of", "when", or "in response to determining".

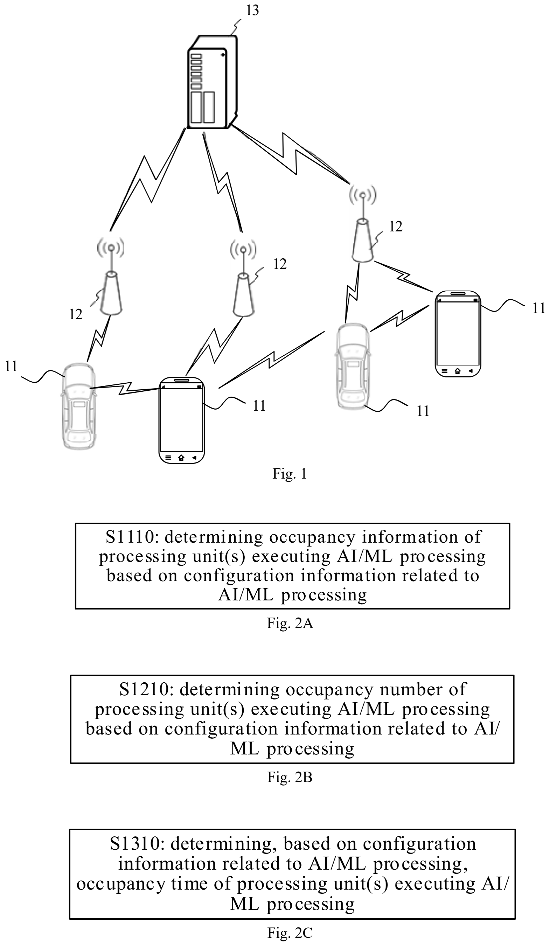

Reference may be made to Fig. 1, which shows a schematic structural diagram of a wireless communication system provided by an embodiment of the present disclosure. As shown in Fig. 1, the wireless communication system is a communication system based on cellular mobile communication technology. The wireless communication system may include: several UEs 11, several access devices 12, and several core network devices 13.

UE 11 may be a device that provides voice and/or data connectivity to users. UE 11 may communicate with one or more core networks via a Radio Access Network (RAN). UE 11 may be an IoT UE, such as a sensor device, a mobile phone (also known as a "cellular" phone), or a computer with an IoT UE. For example, it may be fixed, portable, pocket-sized, handheld, built into a computer, or mounted in a vehicle. For example, it may be a Station (STA), subscriber unit, subscriber station, mobile station, mobile, remote station, access point, remote terminal, access terminal, user terminal, user agent, user device, or User Equipment (UE). Alternatively, UE 11 may be a device on an Unmanned Aerial Vehicle (UAV). Alternatively, UE 11 may be an in-vehicle device, such as a driving computer with wireless communication capabilities, or a wireless communication device connected to an external driving computer. Alternatively, UE 11 may be a roadside device, such as a streetlight, traffic light, or other roadside device with wireless communication capabilities.

The access device 12 may be a network-side device in a wireless communication system. The wireless communication system may be the 4th generation mobile communication network technology (4G) system, also known as a Long Term Evolution (LTE) system; or a 5G system, also known as a New Radio (NR) system or a 5G NR system. Alternatively, the wireless communication system may be a next-generation system after the 5G system. The access network in the 5G system may be called a New Generation-Radio Access Network (NG-RAN), or an MTC system.

The access device 12 may be an evolved base station (eNB) used in a 4G system. Alternatively, the access device 12 may be an access device (gNB) using a centralized distributed architecture in a 5G system. When the access device 12 uses a centralized distributed architecture, it typically includes a Central Unit (CU) and at least two Distributed Units (DUs). The Central Unit is equipped with the protocol stack of Packet Data Convergence Protocol (PDCP), Radio Link Control (RLC), and Media Access Control (MAC) layer. The Distributed Unit is equipped with the Physical (PHY) layer protocol stack. The embodiments of the present disclosure do not limit the specific implementation of the access device 12.

A wireless connection may be established between the access device 12 and the UE 11 via a wireless air interface. In various implementations, the wireless air interface may be based on the 4th generation mobile communication network technology (4G) standard; or based on the 5th generation mobile communication network technology (5G) standard, such as a new air interface; or based on a next-generation mobile communication network technology standard.

The typical core network devices include, but are not limited to, an Access Management Function (AMF) and/or a Policy Control Function (PCF).

As shown in Fig. 2A, an embodiment of the present disclosure provides an information processing method, which may include:

S1110: determining occupancy information of the processing unit(s) executing at least one of AI or ML processing based on configuration information related to at least one of AI or ML processing.

The information processing method may be performed by a terminal or a network device. The network device may include an access network device. The access network device includes, but is not limited to, a base station.

The configuration information may be any network-side configuration information that utilizes AI/ML processing during usage of the terminal. "AI/ML" herein refers to "AI and/or ML."

The configuration information may include, but is not limited to, RRC configuration information.

The configuration information may include: measurement-related configuration information and/or reporting-related configuration information.

The measurement-related configuration information may include: measurements related to Layer 1 (L1) and/or measurements related to Layer 3.

The measurement-related configuration information may include configuration information related to measurements of various reference signals by the terminal. Reference signals include, but are not limited to, Synchronization Signal Blocks (SSBs), Channel State Information-Reference Signals (CSI-RSs), and/or Positioning Reference Signals (PRSs).

The measurement-related configuration information may include configuration information related to reference signal and/or beam measurement.

The reporting-related configuration information may include configuration information for reporting measurement data and/or measurement results obtained after measuring reference signals, and measurement configuration information associated with the reporting, such as measurement configuration ID. The measurement results may be obtained based on the measurement data.

In the embodiments of the present disclosure, "associated" may be understood as "bound".

For example, taking CSI-RS as an example, measurement data or measurement results obtained from CSI-RS measurements are sent to the network device via a CSI report. The configuration information for the CSI report may be one of the aforementioned configuration information. For example, when CSI is compressed and/or quantized using an AI/ML model and then reported, the configuration information is configuration information related to AI/ML processing.

For another example, taking PRS as an example, a terminal measures the PRS sent by a base station and obtains measurement data. Ultimately, the terminal may determine its own location information based on the measurement data and an AI model. The terminal may then report the measurement data and/or the location information to the access network device and/or the core network device.

For example, the AI/ML processing may be performed using an AI model and/or an ML model. The AI/ML model herein may include various neural network models and/or machine learning models. Neural network models may include Convolutional Neural Networks (CNNs) and/or Recurrent Neural Networks (RNNs). Machine learning models may include random forest models and/or Bayesian models. It shall be noted that the above examples are merely illustrative, and specific implementations are not limited to these examples.

The occupancy status of Processing Units (PUs) by AI/ML processing may be indicated by occupancy information. The occupied processing units may include the occupancy of Central Processing Units (CPUs), Micro-Processing Units (MCUs), and/or Graphics Processing Units (GPUs). The occupancy information may include, but is not limited to, the occupancy time information and/or the occupancy number of the processing unit(s).

For example, the processing unit may also be understood to define the number of CSI Processing Units (CPUs), which may be referred to as the number of AI Processing Units (APUs).

In some embodiments, the occupancy information may also include the load rate of a single occupied processing unit.

In an embodiment of the present disclosure, after receiving configuration information from a network device, the terminal may determine the occupancy information of the processing unit(s) based on the configuration information. If the number of PUs occupied by the configuration information is greater than the number of processing units available to the terminal, the terminal may, when there are multiple sets of configuration information to be executed, preferentially discard the configuration information with a lower priority and execute the configuration information with a higher priority based on the priority of each set of configuration information. This discarding may be agreed upon in advance between the network device and the terminal. In this way, the network device can, based on the configuration information discarded by the terminal, stop receiving reports on the resource corresponding to the discarded indication information, etc. The configuration information is configured through RRC signaling, activated or deactivated through MAC CE signaling, and triggered through DCI signaling. The priority of the configuration information may be calculated according to the protocol agreement. The following explanation uses the priority calculation of CSI-related configuration information as an example:

$$\mathrm{Pri}_{iCSI}(y, k, c, s) = 2 \cdot \mathrm{N}_{cells} \cdot \mathrm{M}_s \cdot y + \mathrm{N}_{cells} \cdot \mathrm{M}_s \cdot k + \mathrm{M}_s \cdot c + s$$

.

s is the CSI report Identifier (ID).

c is the serving-cell index.

$k=0$ indicates reporting of Layer 1-Reference Signal Received Power (L1-RSRP) or Layer 1-Signal to Interference plus Noise Ratio (L1-SINR); $k=1$ indicates reporting of other CSI in addition to L1-RSRP or L1-SINR.

$y=0$ indicates aperiodic CSI reporting carried on PUSCH; $y=1$ indicates semi-persistent CSI reporting carried on PUSCH; $y=2$ indicates semi-persistent CSI reporting carried on PUCCH; $y=3$ indicates periodic CSI reporting carried

on PUCCH.

$M_s$ indicates the maximum number of CSI reports configured by the network. $N_{cells}$ indicates the maximum number of serving cells configured by the network. Before sending configuration information to a terminal, the base station determines the occupancy information of processing unit(s) for the terminal to perform related operations based on the configuration information. If the number of PUs occupied by the configuration information exceeds the number of PUs available to the terminal, the base station may adaptively adjust the configuration information, so as to ensure that the transmitted configuration information is compatible with the terminal's capabilities.

In some embodiments, the method further includes:

acquiring configuration information related to AI/ML processing.

If the device executing the information processing method is a base station, the base station may generate the configuration information related to AI/ML processing based on current resource scheduling conditions and/or configuration requirements of the terminal.

If the device executing the information processing method is a terminal, the terminal receives the configuration information related to AI/ML processing sent by the network device.

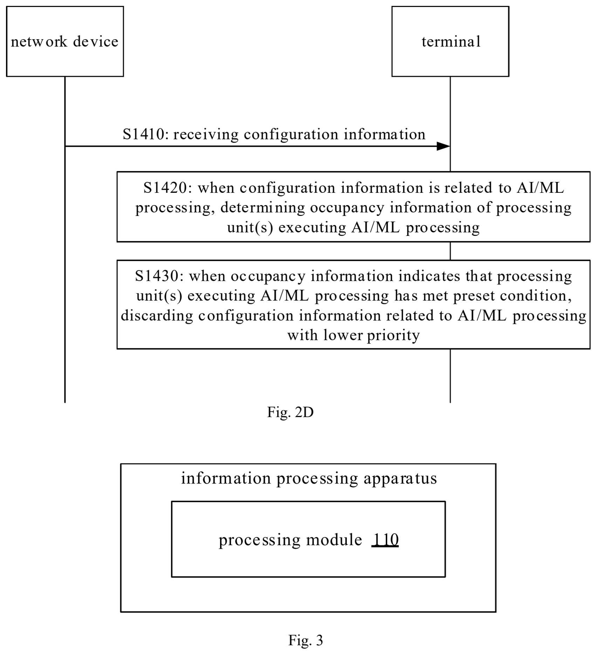

As shown in Fig. 2D, an embodiment of the present disclosure provides an information processing method, which is performed by the terminal, and includes:

S1410: receiving configuration information;

S1420: when the configuration information is related to AI/ML processing, determining occupancy information of the processing unit(s) executing the AI/ML processing;

S1430: when the occupancy information indicates that the processing unit(s) executing the AI/ML processing has met a preset condition, discarding the configuration information related to the AI/ML processing with a lower priority.

For example, the occupancy information indicates that the processing unit(s) executing the AI/ML processing has met the preset condition, which may include: the number of processing units occupied by all the AI/ML processing indicated by the network device within the same symbol exceeds the number of processing units available to the terminal; and/or there is a conflict in the occupancy of one or more processing units by the AI/ML processing associated with multiple sets of configuration information.

As shown in Fig. 2B, an embodiment of the present disclosure provides an information processing method, which includes:

S1210: determining the occupancy number of the processing unit(s) executing the AI/ML processing based on the configuration information related to the AI/ML processing.

**In** an embodiment of the present disclosure, the terminal or network device may determine the occupancy number of the processing unit(s) executing the AI/ML processing at a single moment based on the configuration information.

For example, S1210 may include: determining the occupancy number of the processing unit(s) executing the AI/ML processing within a single time unit based on the configuration information related to the AI/ML processing. The time unit may include a symbol, a mini-slot, or a time slot.

In some embodiments, the terminal or network device determines the occupancy number of the thread(s) required by the processing unit(s) executing the AI/ML processing at a single time moment based on the configuration information.

As shown in Fig. 2C, an embodiment of the present disclosure provides an information processing method, including:

S1310: determining, based on the configuration information related to the AI/ML processing, the occupancy time of the processing unit(s) executing the AI/ML processing.

In this embodiment, a terminal or network device determines, based on the configuration information, the time the processing unit is occupied by the AI/ML processing (*i.e.,* the occupancy time).

The occupancy time may include at least one of: an occupancy start time;

an occupancy end time; or
an occupancy duration.

In some embodiments, the occupancy information may include information about the duration that the AI/ML processing occupies X processing units. X may be any positive integer. The occupancy start time is the time moment when the AI/ML processing is initiated.

In an embodiment, if the configuration information involves multiple measurements and/or multiple reports, S1310 may include: determining, based on the configuration information related to AI/ML processing, the occupancy time of the processing unit(s) executing the AI/ML processing during a single measurement or a single report.

In other embodiments, S1310 may also include: determining, based on the configuration information related to AI/ML model processing, the occupancy time of the processing unit(s) continuously used for executing the AI/ML processing.

In some embodiments, determining the occupancy number of the processing unit(s) executing the AI/ML processing based on the configuration information related to the AI/ML processing includes:

determining the occupancy number of the processing unit(s) executing the AI/ML processing based on the report quantity associated with the configuration information;

determining the occupancy number of the processing unit(s) executing the AI/ML processing based on the time-frequency domain characteristics of the reporting associated with the configuration information;

determining the occupancy number of the processing unit(s) executing the AI/ML processing based on at least one of: the AI/ML model associated with the configuration information, the features involved in the AI/ML processing, the functionalities associated with the AI/ML model, and the complexity class of the AI/ML model;

determining the occupancy number of the processing unit(s) executing the AI/ML processing based on the frequency-domain characteristics of the reporting resource associated with the configuration information;

determining the occupancy number of the processing unit(s) executing the AI/ML processing based on the time-frequency domain characteristics of the measurement resource associated with the configuration information;

determining the occupancy number of the processing unit(s) executing the AI/ML processing based on the frequency-domain characteristics of the control signaling that triggers the configuration information;

The time-frequency domain characteristics of the reporting may include: the time-frequency domain characteristics of the reporting include the time-domain characteristics of the reporting and/or the time-frequency domain characteristics of the reporting include the frequency-domain characteristics of the reporting.

The time-domain characteristics of the reporting include at least one of the following:

a periodic reporting;
a semi-static reporting; or
an aperiodic triggered reporting.

The periodic reporting may be reporting according to a period indicated by the configuration information, and the period may be a statically configured period.

The semi-static reporting may be reporting according to a semi-static period indicated by the semi-static configuration information. The semi-static reporting is unlike the periodic reporting, and the initial semi-static reporting must be triggered by the control signaling from a network device.

The aperiodic triggered reporting may also be understood as dynamic reporting, which may be triggered by the control signaling sent dynamically by a network device or by a pre-configured trigger condition.

In some embodiments, the time-frequency domain characteristics of the reporting include frequency-domain characteristics of the reporting resource(s) and frequency-domain characteristics.

The time-domain characteristics of the reporting may include: the distribution density and the distribution period of the reporting resources in time domain, the triggering mode of the reporting, and/or the time-domain resources occupied by a single reporting.

The frequency-domain characteristics of the reporting resource(s) may include: the distribution location of the reporting resource(s) in frequency domain, the subcarrier spacing (SCS) of the channel on which the frequency-domain resource(s) of the reporting reside, and/or the number of carriers of the frequency domain resource(s) of the reporting.

For example, the frequency-domain characteristics of the reporting resource(s) include: the subcarrier spacing (SCS) of the reporting resource(s).

In some embodiments, the time-frequency domain characteristics of the measurement resource(s) include at least one of the following:

the number of the associated measurement resources;
the frequency-domain distribution density of the reference signal to be measured;
the number of antenna ports for the reference signal to be measured; or
the subcarrier spacing (SCS) associated with the configuration information.

The time-frequency domain characteristics may include: the time-domain characteristics of the time-frequency domain resources associated with the configuration information.

For example, the number of the associated measurement resources may include: the number of the associated time-domain resources, the number of the associated frequency-domain resources, the number of the associated Resource Elements (REs), and the number of the associated Resource Blocks (RBs).

For example, the number of measurement resources may be positively correlated with the number of processing units occupied by AI/ML processing.

As another example, the number of measurement resources may be positively correlated with the duration that AI/ML processing occupies the processing units.

The measurements associated with the aforementioned configuration information may be periodic measurements, semi-periodic measurements, or one or more measurements associated with a single trigger.

The reference signal may be various physical layer signals, such as SSBs, CSI-RSs, and/or PRSs.

A terminal may be configured with one or more antenna ports. A single measurement may utilize one or more antenna ports of the terminal. Generally, the more antenna ports associated with a single measurement, the more measurement data generated, and the greater the amount of data required for AI/ML processing. Thus, the number of processing units occupied by the AI/ML processing becomes larger or the occupancy duration becomes longer. This indicates that the number of occupied antenna ports is positively correlated with the number of processing units occupied by AI/ML processing, and/or the number of occupied antenna ports is positively correlated with the duration of the AI/ML processing occupying the processing units.

Example SCSs for communication between a terminal and a network device may include 15 kHz, 30 kHz, 45 kHz, 60 kHz, 120 kHz, or 240 kHz.

A larger SCS value shortens the occupancy duration of a symbol. Given the same number of time-domain units, the EU will generate more measurement data within a given time range, potentially requiring more measurement values to be processed, and therefore requiring more processing units. That is, in some scenarios, the size of the SCS is positively correlated with the number of required processing units.

In some embodiments, when the SCS is less than or equal to 120 kHz, the number of occupied APUs is the same. That is, when the SCS is 15 kHz, 30 kHz, 45 kHz, 60 kHz, and 120 kHz, the number of occupied APUs is X. When the SCS is greater than 120 kHz, the number of occupied APUs is Y, where $Y > X$.

In some embodiments, the SCS associated with the configuration information may include: the SCS of the measurement resources associated with the configuration information and/or the SCS of the reporting resources associated with the configuration information.

In other embodiments, if the configuration information is associated with semi-static reporting and/or aperiodic triggered reporting, the SCS associated with the configuration information may also include: the SCS of the transmission channel of the control signaling that triggers measurement and/or reporting associated with the configuration information. This transmission channel may include, but is not limited to, various downlink channels, such as the PDCCH channel.

**In** some embodiments, the frequency-domain characteristics of the control signaling triggering the configuration information include: the SCS of the channel on which the control signaling that triggers the configuration information resides.

If the configuration information is associated with aperiodic measurement and/or reporting, the control signaling is required to trigger measurement and/or reporting. The network device will send the control signaling, and the terminal will receive the control signaling.

If the configuration information is associated with semi-static measurement and/or reporting, the control signaling is required for the initial triggering of the semi-static measurement and/or reporting. The network device will send the control signaling, and the terminal will receive the control signaling.

Any of the aforementioned control signaling may include, but is not limited to, Downlink Control Information (DCI) and/or a Media Access Control (MAC) Control Element (CE).

For example, if the control signaling is DCI, the frequency-domain characteristics of the control signaling that triggers the configuration information may include: the SCS of the Physical Downlink Control Channel (PDCCH) on which the DCI resides.

In some embodiments, determining the occupancy time of the processing unit(s) executing AI/ML processing based on configuration information related to AI/ML processing includes:

if the report quantity associated with the configuration information is not set to 'none', determining the occupancy time of the processing unit(s) executing AI/ML processing based on at least the reporting resource(s) associated with the configuration information;
if the report quantity associated with the configuration information is set to 'none', determining the occupancy time of the processing unit(s) executing AI/ML processing based on the measurement resource(s) associated with the configuration information.

The report quantity may be a measurement parameter and/or result quantity that needs to be sent to the network device. For example, the report quantity may include at least one of the following:

Reference Signal Received Power (RSRP), such as the AI-predicted L1-RSRP;

Signal to Interference plus Noise Ratio (SINR), such as the AI-predicted SINR, Channel State Information (CSI), such as the AI-predicted Channel Quality Indecation (CQI), channel Rank Indication (RI), channel Precoding Matrix Indicator (PMI), etc.;
Compressed CSI, such as the AI-compressed and coded eigenvector, etc.;
Beam ID, such as the AI-predicted beam ID, Channel Resource Index (CRI), and/or Synchronization Signal Block index (SSB-index);
Reference Signal Received Quality (RSRQ), such as the AI-predicted beam quality, where the beam quality may include, but is not limited to, L1-RSRQ.

**In** some embodiments, the report quantity may be a state quantity (or measurement parameter) processed by the AI/ML model.

If the report quantity is not set to 'none', it indicates that the terminal needs to send the report quantity to the network device. **In** this case, the occupancy time of the processing unit(s) required to execute the AI/ML processing is determined based on the reporting resource(s) associated with the configuration information.

The reporting resource(s) may be used by the terminal to report the measurement value and/or the calculation value related to the report quantity to the network device.

For example, the terminal may send the execution results of the configuration information to the network device via a report. The reporting resource(s) may be used by the terminal to send reports to the network device. In this case, the end time of the AI/ML processing occupying the processing unit(s) may be related to the end time of the reporting resource(s).

If the report quantity is set to 'none', it indicates that the terminal may currently perform related operations based on the configuration information, such as performing measurement operations, but does not need to send reports to the network device. In this case, the time the AI/ML processing occupies the processing unit(s) is more determined by the measurement resource(s) associated with the configuration information. The measurement resource(s) includes at least the time resource(s) for the measurement performed based on the configuration information. In this case, the end time of the AI/ML processing occupying the processing unit(s) may be related to the end time of the measurement resource(s).

In the embodiments of the present disclosure, the occupancy time of the processing unit(s) required by the AI/ML processing is determined in two situations respectively, depending on whether the report quantity is set to 'none'. This can more accurately reflect the time required for the terminal to use the AI/ML model to perform operations related to the configuration information.

In some embodiments, if the report quantity associated with the configuration information is not set to 'none', determining the occupancy time of the processing unit(s) executing the AI/ML processing based at least on the reporting resource(s) associated with the configuration information, includes:
if the report quantity associated with the configuration information is not set to 'none', determining the occupancy time of the processing unit(s) executing the AI/ML processing based on the reporting type associated with the configuration information and the reporting resource(s) associated with the configuration information.

In the embodiments of the present disclosure, if the report quantity associated with the configuration information is not set to 'none', the occupancy time of the processing unit(s) required by the AI/ML processing is further determined based on the reporting type and the reporting resource(s) associated with the configuration information. Different reporting types require different AI/ML processing times. Therefore, by differentiating different reporting types, and determining the occupancy time of the processing unit(s) executing the AI/ML processing, the determined occupancy time is enabled to be more accurate.

In some embodiments, when the report quantity associated with the configuration information is not set to 'none', determining the occupancy time of the processing unit(s) executing the AI/ML processing based on the reporting type associated with the configuration information and the reporting resource(s) associated with the configuration information includes at least one of the following:

if the configuration information is associated with a reporting and the reporting associated with the configuration information is a periodic reporting or a semi-static reporting, determining the occupancy time of the processing unit(s) occupied by the AI/ML processing starting from the first symbol of the measurement resource associated with the configuration information, until the last symbol of the reporting resource;
if the configuration information is associated with a reporting and the reporting associated with the configuration information is an aperiodic triggered reporting, determining the occupancy time of the processing unit(s) occupied by the AI/ML processing starting from the first symbol after the trigger, until the last symbol of the reporting resource.

The symbol here is an abbreviation for Orthogonal Frequency Division Multiplexing (OFDM) symbol.

The periodic reporting may include periodic measurement and/or periodic reporting according to the period configured according to the configuration information.

The start time for AI/ML processing to occupy a processing unit within each cycle may be determined based on the start time of the measurement resource and end at the last symbol of the reporting resource.

The semi-static reporting may be performed for measurement and/or reporting according to the semi-static cycle, from the start of execution of the semi-static configuration information triggered by a control instruction to the end of execution. Therefore, in some embodiments, based on the semi-static configuration information, for all the semi-static measurements and/or the semi-static reporting, the occupation time of the processing unit occupied by a single AI/ML processing within a semi-static cycle may be determined from the start symbol (i.e., the first symbol) of the measurement resource to the last symbol of the reporting resource within each cycle.

In some embodiments, since the initial execution of semi-static measurement and/or semi-static reporting is triggered by control signaling, for the initial execution of semi-static measurement and/or semi-static reporting, the occupation time of the processing unit occupied by the AI/ML processing may be determined as starting from the first symbol after the transmission until the last symbol of the reporting resource.

In some embodiments, the aperiodic triggered reporting may be understood as dynamic reporting. The dynamic reporting may be configured by a control instruction. The control instruction may be the aforementioned DCI and/or MAC CE, etc. Because the dynamic reporting involves the control instruction, in embodiments of the present disclosure, to accurately determine the occupancy time of the processing unit occupied the by AI/ML processing, the occupancy time is determined based on the first symbol after transmission of the control instruction ends and the last symbol of the reporting resource.

In some embodiments, if the report quantity associated with the configuration information is set to 'none', the occupancy time of the processing unit executing the AI/ML processing is determined based on the measurement resource associated with the configuration information, including:

if the report quantity associated with the configuration information is set to 'none', determining the occupancy time of the processing unit executing the AI/ML processing based on the processing latency and the measurement resource associated with the configuration information.

In embodiments of the present disclosure, if the report quantity associated with the configuration information is set to 'none', this indicates that no reporting is required. In this case, the processing latency and the measurement resource associated with the configuration information are used together to determine the occupancy time of the processing unit executing the AI/ML processing.

Within the measurement resource, the terminal performs measurements and obtains measurement values. After obtaining the measurement values, the AI/ML model may perform relevant processing on the measurement values, such as removing outliers, calculating measurement results based on the measurement values, and/or quantizing and/or compressing the measurement values. In this case, the AI/ML model requires a certain amount of latency. This latency required for the AI/ML model to perform related processing about the measurement values after the measurement is completed is referred to as the foregoing processing latency.

In embodiments of the present disclosure, to accurately determine the occupancy time, the occupancy time of the processing unit for the AI/ML processing is determined by combining the measurement resource and the processing latency.

In some embodiments, when the configuration information is associated with not reporting, the occupancy time of the processing unit executing the AI/ML processing is determined based on the processing latency and the measurement resource associated with the configuration information, including at least one of the following:

when the report quantity associated with the configuration information is set to 'none' and the reporting associated with the configuration information is a periodic reporting or a semi-static reporting, the occupancy time of the processing unit executing the AI/ML processing is determined starting from the first symbol of the measurement resource associated with the configuration information until X symbols after the last symbol of the measurement resource, where X is a positive integer;

when the report quantity associated with the configuration information is set to 'none' and the reporting associated with the configuration information is an aperiodic triggered reporting, the occupancy time of the processing unit executing the AI/ML processing is determined starting from the first symbol after the trigger, until the later one between M symbols after the trigger and N symbols after the last symbol of the measurement resource, where M and N are both positive integers.

Furthermore, in an embodiment of the present disclosure, if the report quantity associated with the configuration information is set to 'none' and the configuration information is associated with a periodic reporting or a semi-static reporting, the first symbol of the measurement resource may be determined as the start time of the occupancy time, and X symbols after the last symbol after the measurement may be determined as the end time of the occupancy time. The X symbols may be the aforementioned processing latency. For example, the value of X may be any positive integer.

In some embodiments, the value of X may be related to the type of the reference signal for measurement, the type of the measurement value, the amount of data for the measurement value, and/or the type of the AI/ML model and/or the number of currently-occupied processing units. That is, in some embodiments, the method may further include: determining the value of X based on the type of the reference signal for measurement, the type of the measurement value, the amount of data for the measurement value, and/or the AI/ML model and/or the number of currently-occupied processing units. Typically, the value of X is positively correlated with the amount of data for the measurement value. The value of X is negatively correlated with the size of the AI/ML model.

In other embodiments, to simplify processing, the value of X may be predefined, for example, by protocol agreement.

In some embodiments, for the initial reporting of the aperiodic triggered reporting or the semi-static reporting, the first symbol after the trigger is determined as the start symbol of the occupancy time, and the later one between M symbols after the trigger and N symbols after the last symbol of the measurement resource is determined as the end symbol of the occupancy time.

In embodiments of the present disclosure, a specific method is further provided for determining, when the report quantity is set to 'none', the occupancy time of the AI/ML model executing related operations (i.e., AI/ML processing) based on the measurement resource and/or the reporting resource associated with the configuration information.

In some embodiments, the configuration information includes at least one of the following:

CSI resource configuration (CSI resource config) information;
CSI report configuration (CSI report config) information.

The CSI resource configuration information may be used to configure the measurement resource for CSI-related reference signals. For example, the CSI resource configuration information may include at least one of the following:

a non-zero CSI-RS resource set for transmitting non-zero CSI-RS so that beamform measurements are performed for the terminal;
a CSI-SSB resource set;
Channel State Information-Interference Measurement (CSI-IM) for transmitting CSI-IM so that interference measurements are performed for the terminal.

It shall be noted that the above is merely an example of CSI resource configuration information, and the specific implementations are not limited to this example.

The CSI report resource configuration information may be used to transmit CSI reports. For example, the CSI report resource configuration information may include the report quantity based on AI/ML processing, such as compressed reporting of feature vectors based on AI/ML processing, reporting of predicted CSI-RS resource indicators based on AI/ML processing. The CSI-RS resource indicator may include, but is not limited to, a beam identifier.

It shall be noted that the above is merely an example of CSI report resource configuration information, and the specific implementations are not limited to this example.

In some embodiments, the configuration information may also include positioning-signal configuration information. The positioning-signal configuration information may include: positioning-signal resource configuration information and/or reporting configuration information for positioning measurement data and/or positioning measurement result.

In some embodiments, the present disclosure provides an information processing method that defines the number of processing units occupied by different AI processing.

When the AI processing target is CSI, the report quantity may include, but is not limited to, at least one of the following information:

CSI report quantity being compressed channel precoding information;
predicted channel matrix information;
compressed channel matrix information;
predicted beam ID information;
predicted beam L1-RSRP information.

The number of processing units here may also be understood to define the number of CSI processing units (CPUs), which may be referred to as the number of AI processing units (APUs). For example, CPUs are used hereafter.

Different CPU numbers are defined based on at least one of or a combination of the following aspects.

The determination is based on different reporting quantities and/or use cases. These different reporting quantities and/or use cases include, but are not limited to:

AI-based CSI compressed and quantized eigenvector information/precoding matrix information;
AI-based CSI time-domain predicted channel matrix information;
AI-based CSI time-domain predicted channel matrix information after processing and then AI-based CSI compressed and quantized eigenvector information/precoding matrix information;
AI-based beam ID and/or RSRP information based on beam time-domain and/or spatial-domain prediction, and AI-based positioning information.

The determination is based on reporting time-domain characteristics. The time-domain characteristics include periodic, semi-static, and aperiodic reporting. For example, for the same report quantity, the aperiodic reporting occupies X CPUs, while the periodic and semi-static reporting occupies Y CPUs.

The determination is based on different model IDs, feature IDs, or functionality IDs. Due to the varying complexity of different features, such as CSI prediction and CSI compression, the number of occupied CPUs varies. Even for the same feature, with different models, such as a CNN model and a Transformer model used for CSI compression, the Transformer model generally has higher implementation complexity and occupies more CPUs than the CNN model.

Specifically, different model IDs, feature IDs, or functionality IDs may be assigned to a complexity class, and the number of occupied CPUs is determined based on the complexity class.

Based on the uplink and downlink SCS, the processing complexity increases with increasing SCS. Therefore, different occupancy numbers of CPUs are defined based on different SCSs. For the aperiodic triggered reporting, the SCS is determined by the maximum SCS among PDCCH, CSI-RS, and PUSCH. For example, the PDCCH may be the transmission channel for the control signaling, the CSI-RS may be the transmission resource for the reference signal, and the PUSCH may be the reporting channel for the CSI report. In other words, for the aperiodic triggered reporting, the SCS used by the transmission channel for the control signaling, the transmission resource for the reference signal, and the reporting resource for the report quantity serves as a reference parameter for determining the occupancy number of the processing unit(s) required for the AI/ML processing.

It is based on different numbers of resources for the reference signal.

The occupancy number of CPU(s) is positively correlated with the number of resources of the reference signal for measurement. The greater the number of resources of the reference signal for measurement, the greater the occupancy number of CPU(s). Alternatively, it may be understood that the number of CPU(s) is determined based on the number of measurement resource(s).

The number of measurement resource(s) is affected by the specific RS resource configuration, such as the number of antenna ports and frequency -domain resource density.

The occupancy time of APU/CPU for the AI processing mentioned above may be determined as follows.

Generally, CSI and/or beam information reporting is reported to the base station. Positioning results are reported to the core network. Positioning reporting may be periodic or aperiodic. CSI and beam measurement reporting may be periodic reporting, semi-static reporting, or aperiodic triggered reporting (referred to as aperiodic reporting).

For periodic and semi-static reporting (except for the first semi-static CSI reporting triggered by DCI), the occupancy time of CPU is calculated from the first symbol of the measurement resource to the last symbol of the reporting resource. The measurement resource here refers to the last CSI-RS/CSI-IM/SSB that is no later than the CSI reference resource.

The measurement resource may be the transmission resource for the reference signal. The reference signal may include, but is not limited to, CSI-RS/CSI-IM/SSB.

The CSI reference resource, distinct from the measurement resource, is used by the UE to determine the measurement resource. The CSI reference resource is generally provided before the reporting resource.

For the aperiodic CSI reporting and the first semi-static CSI triggered by DCI, the occupancy time of CPU starts from the first symbol after the triggering PDCCH ends and continues to the last symbol of the reporting resource.

In particular, in beam processing, there is a specific case where no quantity needs to be reported, and the only need is beam selection at the terminal side. In this case, the occupancy time is determined as follows.

For the semi-static reporting, except for the first semi-static CSI reporting triggered by DCI, the occupancy time of CPU starts from the first symbol of the semi-static or periodic measurement resource and ends at X symbols after the last symbol of the last measurement resource.

For the aperiodic reporting, the occupancy time of CPU starts from the first symbol after the PDCCH that triggers the aperiodic reporting to the later one between M and N. M and N correspond to the end position X of PDCCH and the end position Y of the measurement resource, respectively.

X may be understood as the measurement latency. Y may be understood as the DCI processing latency.

In an embodiment, when configuring CSI reporting, the report quantity includes the beam identifier (ID), reference signal resource ID, synchronization signal ID, RSRP, and/or SINR obtained by the terminal based on the AI/ML processing. For example, the report quantity may be configured to include at least one of the following.

ai-cri-RSRP, which instructs the terminal to report the AI-predicted channel state information-reference signal resource index (CSI-RS resource index (CRI)) and L1-RSRP.

ai-ssb-Index-RSRP, which instructs the terminal to report the AI-predicted SSB index and L1-RSRP.

ai-cri-SINR, which instructs the terminal to report the AI-predicted CRI reporting and SINR.

ai-ssb-Index-SINR, which instructs the terminal to report the AI-predicted SSB index and SINR.

ai-cri-RSRP-Capability[Set]Index, which instructs the terminal to report the AI-predicted CRI and L1-RSRP reporting, as well as the maximum number of Sounding Reference Signal (SRS) antenna ports supported by UE.

ai-ssb-Index-RSRP-Capability[Set]Index, which instructs the terminal to report the AI-predicted SSB index and L1-RSRP reporting, as well as the maximum number of SRS antenna ports supported by UE.

ai-cri-SINR-Capability[Set]Index, which instructs the terminal to report the AI-predicted CRI and SINR, as well as the maximum number of SRS antenna ports supported by UE.

ai-ssb-Index-SINR-Capability[Set]Index, which instructs the terminal to report the AI-predicted SSB index and SINR reporting, as well as the maximum number of SRS antenna ports supported by UE.

ai-none, which indicates that the report quantity is set to 'none'. This 'none' report quantity may include scenarios where the terminal uses beams for AI-predicted communication.

If the CSI-RS resource set does not have any higher-layer parameters to be transmitted, that is, the report quantity is set to 'none', then APU/CPU = 1.

In an embodiment, when configuring CSI reporting, the report quantity includes compressed feature vectors, precoding vectors, or precoding matrices obtained by the terminal based on AI/ML processing.

For example, the report quantity is set as follows.

ai-cri-RI-PMI-CQI, which instructs the terminal to report CRI, channel RI, channel PMI, and CQI.

ai-cri-RI-x, which instructs the terminal to report CRI, channel RI, and x. Here, x may be any report quantity that the network device instructs the terminal to report. For example, x may refer to PMI or some elements of PMI used for beam selection.

ai-cri-RI-x-CQI, which instructs the terminal to report CRI, channel RI, x, and CQI.

Alternatively, ai-cri-RI-LI-PMI-CQI, which instructs the terminal to report CRI, channel RI, L1-RSRP, the first part of channel PMI, and CQI.

If reporting is aperiodic, the number of occupied CPUs is equal to the CPU capacity reported by the terminal.

If reporting is semi-static or periodic, the number of occupied CPUs is equal to the total number of measurement resources.

In an embodiment, when configuring CSI reporting, the report quantity includes compressed feature vectors, precoding vectors, and/or precoding matrix information obtained by the terminal based on AI/ML processing. For example, the report quantity is set to ai-cri-RI-PMI-CQI, ai-cri-RI-x, ai-cri-RI-x-CQI, or ai-cri-RI-LI-PMI-CQI.

If semi-static and periodic reporting is used, and the complexity class of the used AI model is 1, the number of occupied CPUs is equal to X. If the complexity class of the used AI model is 2, the number of occupied CPUs is Y.

In an embodiment, in a case that the terminal sends AI-based positioning results to the core network, if the function ID is 1, the number of occupied AI processing units is M; and if the function ID is 2, the number of occupied AI processing units is N.

As shown in Fig. 3, an embodiment of the present disclosure provides an information processing apparatus, including:

a processing module 110, configured to determine occupancy information of the processing unit(s) executing AI/ML processing based on configuration information related to AI/ML processing.

The information processing apparatus may be a terminal or a network device.

In some embodiments, the processing module 110 may include a program module. After execution by a processor, the program module is capable of performing the aforementioned operations.

In other embodiments, the processing module 110 may include a hardware-software module. The hardware-software module includes, but is not limited to, a programmable array. The programmable array includes, but is not limited to, a field programmable array and/or a complex programmable array.

In still other embodiments, the processing module 110 may include a pure hardware module. The pure hardware module includes, but is not limited to, an application-specific integrated circuit.

In some embodiments, the processing module may also include a storage module, which may be connected to the processing module 110 and may be used to store the configuration information.

In other embodiments, the processing module may also include an acquisition module. The acquisition module may be used to acquire configuration information related to AI/ML processing.

It is understood that the processing module 110 is configured to determine the occupancy number of the processing unit(s) executing AI/ML processing based on configuration information related to AI/ML processing; and/or determine the occupation time of the processing unit(s) executing AI/ML processing based on configuration information related to AI/ML processing.

It can be understood that the processing module 110 is configured to perform at least one of the following:

determining the occupancy number of the processing unit(s) executing AI/ML processing based on the report quantity associated with the configuration information;

determining the occupancy number of the processing unit(s) executing AI/ML processing based on the time-frequency domain characteristics of the reporting associated with the configuration information;

determining the occupancy number of the processing unit(s) executing AI/ML processing based on at least one of the AI/ML model associated with the configuration information, the features involved in the AI/ML processing, the functionalities associated with the AI/ML model, and the complexity class of the AI/ML model;

determining the occupancy number of the processing unit(s) executing AI/ML processing based on the frequency-domain characteristics of the reporting resources associated with the configuration information;

determining the occupancy number of the processing unit(s) executing AI/ML processing based on the time-frequency domain characteristics of the measurement resource associated with the configuration information;

determining the occupancy number of the processing unit(s) executing AI/ML processing based on the frequency-domain characteristics of the control signaling triggering the configuration information.

It is understood that the time-frequency domain characteristics of the reporing include the time-domain characteristics of the reporting, and the time-domain characteristics of the reporting include at least one of the following:

periodic reporting;
semi-static reporting;
aperiodic triggered reporting.

It is understood that the time-frequency domain characteristics of the reporting include the frequency-domain characteristics of the reporting resource, and the frequency-domain characteristics of the reporting resource include: the subcarrier spacing (SCS) of the reporting resource.

It is understood that the time-frequency domain characteristics of the measurement include at least one of the following:

the number of associated measurement resources;
the frequency-domain distribution density of the reference signal to be measured;
the number of antenna ports for the reference signal to be measured;
the subcarrier spacing (SCS) associated with the configuration information.

It is understood that the frequency-domain characteristics of the control signaling that triggers the configuration information include: the SCS of the channel on which the control signaling that triggers the configuration information resides.

It is understood that the processing module 110 is configured to perform at least one of the following:

if the report quantity associated with the configuration information is not set to 'none', determining the occupancy time of the processing unit(s) executing the AI/ML processing based on at least the reporting resource(s) associated with the configuration information;

if the report quantity associated with the configuration information is set to 'none', determining the occupancy time of the processing unit(s) executing the AI/ML processing based on the measurement resource(s) associated with the configuration information.

It is understood that the processing module 110 is configured to determine the occupancy time of the processing unit(s) executing the AI/ML processing based on the reporting type associated with the configuration information and reporting resource(s) associated with the configuration information, if the report quantity associated with the configuration information is not set to 'none'.

It can be understood that the processing module 110 is configured to perform at least one of the following:

when the configuration information is associated with reporting and the reporting associated with the configuration information is periodic reporting or semi-static reporting, determining the occupancy time of the processing unit occupied by the AI/ML processing starting from the first symbol of the measurement resource associated with the configuration information, until the last symbol of the reporting resource;

when the configuration information is associated with reporting and the reporting associated with the configuration information is aperiodic triggered reporting, determining the occupancy time of the processing unit occupied by the AI/ML processing starting from the first symbol after the trigger, until the last symbol of the reporting resource.

It can be understood that the processing module 110 is configured to, when the report quantity associated with the configuration information is set to 'none', determine the occupancy time of the processing unit executing the AI/ML processing based on the measurement resource associated with the configuration information and the processing latency.

It can be understood that the processing module 110 is configured to perform at least one of the following:

when the report quantity associated with the configuration information is set to 'none' and the reporting associated with the configuration information is periodic reporting or semi-static reporting, determine the occupancy time of the processing unit executing the AI/ML processing starting from the first symbol of the measurement resource associated with the configuration information until X symbols after the last symbol of the measurement resource, where X is a positive integer;

when the report quantity associated with the configuration information is set to 'none' and the reporting associated with the configuration information is aperiodic triggered reporting, determine the occupancy time of the processing unit executing the AI/ML processing starting from the first symbol after the trigger, until the later one between M symbols after the trigger and N symbols after the last symbol of the measurement resource, where M and N are both positive integers.

It is understood that the configuration information includes at least one of the following:

CSI resource configuration (CSI resource config) information;
CSI report configuration (CSI report config) information.

An embodiment of the present disclosure provides a communications device, comprising:

a memory for storing processor-executable instructions;
a processor, connected to the memory respectively.

The processor is configured to perform the information processing method provided by any of the aforementioned technical solutions.

The memory may include various types of storage media, which are non-transitory computer storage media that can continue to memory information stored thereon after the communications device loses power.

Here, the communications device includes: a terminal and/or a network device.

The processor may be connected to the memory via a bus, etc., for reading an executable program stored in the memory, such as at least one of the methods shown in Figs. 2A to 2D.

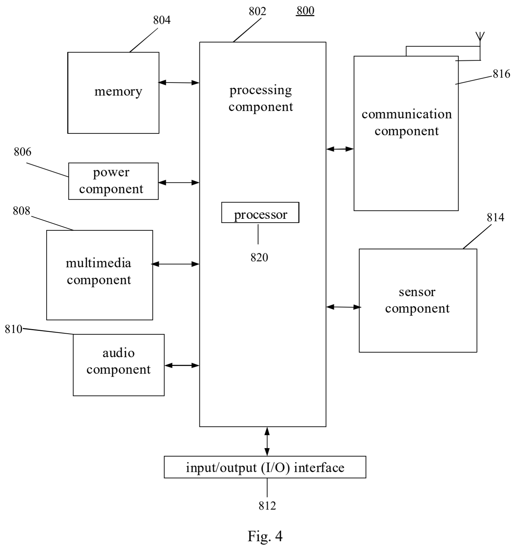

Fig. 4 is a block diagram of a terminal 800 according to an example embodiment. For example, the terminal 800 may be a mobile phone, a computer, a digital broadcast user equipment, a messaging device, a game console, a tablet device, a medical device, a fitness device, a personal digital assistant, etc.

Referring to Fig. 4, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of the terminal 800, such as operations associated with display, phone calls, data communications, camera operations, and recording operations. The processing component 802 may include one or more processors 820 to execute instructions to perform all or some of the steps of the aforementioned method(s). Furthermore, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support operations on the terminal 800. Examples of such data include instructions for any application or method operating on the terminal 800, contact data, phonebook data, messages, images, videos, and the like. The memory 804 may be implemented using any type of volatile or non-volatile memory device, or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

The power component 806 provides power to various components of the terminal 800. The power component 806 may include a power management system, one or more power supplies, and other components associated with generating, managing, and distributing power to the terminal 800.

The multimedia component 808 includes a screen that provides an output interface between the terminal 800 and the user. **In** some embodiments, the screen may include a liquid crystal display (LCD) and a touch panel (TP). If the screen includes a touch panel, it may be implemented as a touch screen to receive input signals from the user. The touch panel includes one or more touch sensors to sense touches, slides, and gestures on the touch panel. The touch sensors may detect not only the boundaries of a touch or slide action, but also the duration and pressure associated with the touch or slide action. **In** some embodiments, the multimedia component 808 includes a front-facing camera and/or a rear-facing camera. When the terminal 800 is in an operation mode, such as a capture mode or a video mode, the front-facing camera and/or the rear-facing camera may receive external multimedia data. Each of the front-facing and the rear-facing cameras may have a fixed optical lens system or have a variable focal length and optical zooming capabilities.

The audio component 810 is configured to output and/or input audio signals. For example, the audio component 810 includes a microphone (MIC), which is configured to receive external audio signals when the terminal 800 is in an operation mode, such as a call mode, a record mode, or a voice recognition mode. The received audio signals may be further stored in the memory 804 or transmitted via the communication component 816. In some embodiments, the audio component 810 also includes a speaker for outputting audio signals.

The I/O interface 812 provides an interface between the processing component 802 and peripheral interface modules, such as a keyboard, a click wheel, buttons, etc. These buttons may include, but are not limited to, a home button, a volume button, a start button, and a lock button.

The sensor component 814 includes one or more sensors for providing various status assessments of the terminal 800. For example, the sensor component 814 may detect the on/off state of the terminal 800, the relative positioning among components, such as display and keypad of the terminal 800. The sensor component 814 may also detect changes in position of the terminal 800 or a component of the terminal 800, the presence or absence of a user contact with the terminal 800, the orientation or acceleration/deceleration of the terminal 800, and changes in temperature of the terminal 800. The sensor component 814 may include a proximity sensor configured to detect the presence of nearby objects without any physical contact. The sensor component 814 may also include an optical sensor, such as a CMOS or CCD image sensor, for use in imaging applications. In some embodiments, the sensor component 814 may also include an accelerometer, a gyroscope, a magnetic sensor, a pressure sensor, or a temperature sensor.

The communication component 816 is configured to facilitate wired or wireless communication between the terminal 800 and other devices. The terminal 800 may access wireless networks based on communication standards, such as WiFi, 2G, or 3G, or a combination thereof. In an example embodiment, the communication component 816 receives broadcast signals or broadcast-related information from an external broadcast management system via a broadcast channel. In an example embodiment, the communication component 816 also includes a near-field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology, and other technologies.

In an example embodiment, the terminal 800 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components to perform the aforementioned method(s).

In an example embodiment, a non-transitory computer-readable storage medium including instructions is also provided, such as a memory 804 including instructions. These instructions are executable by the processor 820 of the terminal 800 to perform the aforementioned method(s). For example, the non-transitory computer-readable storage medium may be a ROM, random access memory (RAM), a CD-ROM, a magnetic tape, a floppy disk, an optical data storage device, or the like.

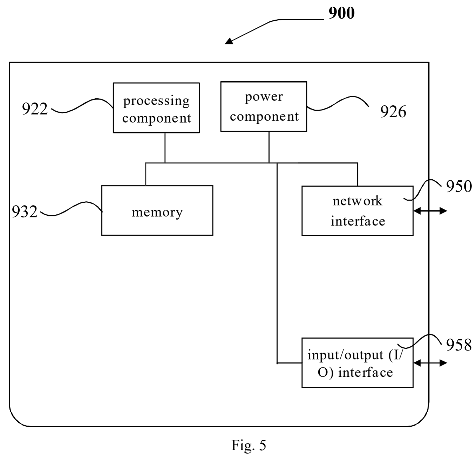

Referring to Fig. 5, the communication device 900 includes a processing component 922, which further includes one or more processors, and memory resources represented by the memory 932 for storing instructions, such as applications, that can be executed by the processing component 922. The applications stored in the memory 932 may include one or more modules, each corresponding to a set of instructions. Furthermore, the processing component 922 is configured to execute instructions to perform any of the aforementioned methods applied to access devices, such as the methods shown in any of Figs. 2A to 2D, and illustratively, at least one of the methods shown in Figs. 2A to 2D.

The communication device 900 may also include a power component 926 configured to perform power management for the communication device 900, a wired or wireless network interface 950 configured to connect the communication device 900 to a network, and an input/output (I/O) interface 958. The communication device 900 may operate on an operation system stored in the memory 932, such as Windows Server™, Mac OS X™, Unix™, Linux™, FreeBSD™, or the like.

Under no contradiction, each step in an embodiment or example may be implemented as a standalone embodiment, and the steps may be combined in any way. For example, a solution with some steps removed from an embodiment or example may also be implemented as a standalone embodiment, and the order of the steps in an embodiment or example may be interchanged. Furthermore, the alternatives or examples in an embodiment or example may be combined in any way. Furthermore, the embodiments or examples may be combined in any way. For example, some or all steps from different embodiments or examples may be combined in any way, and one embodiment or example may be combined in any way with the alternatives or examples of other embodiments or implementations.

Those skilled in the art will readily recognize other embodiments of the present disclosure after considering the specification and practicing the contents disclosed herein. The present disclosure is intended to cover any variations, uses, or adaptations of the present disclosure that follow the general principles of the present disclosure and include common knowledge or customary techniques in the art not disclosed herein. The specification and embodiments are to be considered as example only, with the true scope and spirit of the present disclosure being indicated by the following claims.

It should be understood that the present disclosure is not limited to the precise construction described above and illustrated in the accompanying drawings and that various modifications and variations may be made without departing from its scope. The scope of the present disclosure is to be limited solely by the appended claims.

**Claims**

1. An information processing method, comprising:
   determining, based on configuration information related to at least one of Artificial Intelligence (AI) or Machine Learning (ML) processing, occupancy information of one or more processing units executing the at least one of AI or ML processing.

2. The method according to claim 1, wherein determining, based on the configuration information related to the at least one of Artificial Intelligence (AI) or Machine Learning (ML) processing, the occupancy information of the one or more processing units executing the at least one of AI or ML processing comprises at least one of:

   determining, based on the configuration information related to the at least one of AI or ML processing, an occupancy number of the one or more processing units executing the at least one of AI or ML processing; or
   determining, based on the configuration information related to the at least one of AI or ML processing, an occupancy time of the one or more processing units executing the at least one of AI or ML processing.

3. The method according to claim 2, wherein determining, based on the configuration information related to the at least one of AI or ML processing, the occupancy number of the one or more processing units executing the at least one of AI or ML processing comprises:

   determining the occupancy number of the one or more processing units executing the at least one of AI or ML processing based on a report quantity associated with the configuration information;
   determining the occupancy number of the one or more processing units executing the at least one of AI or ML processing based on time-frequency domain characteristics of a reporting associated with the configuration information;
   determining the occupancy number of the one or more processing units executing the at least one of AI or ML processing based on at least one of: at least one of AI or ML model associated with the configuration information, features involved in the at least one of AI or ML processing, functionalities associated with the at least one of AI or ML model, or a complexity class of the at least one of AI or ML model;
   determining the occupancy number of the one or more processing units executing the at least one of AI or ML processing based on frequency-domain characteristics of a reporting resource associated with the configuration information;
   determining the occupancy number of the one or more processing units executing the at least one of AI or ML processing based on time-frequency domain characteristics of one or more measurement resources associated with the configuration information;
   determining the occupancy number of the one or more processing units executing the at least one of AI or ML processing based on frequency-domain characteristics of a control signaling triggering the configuration information.

4. The method according to claim 3, wherein the time-frequency domain characteristics of the reporting comprise time-domain characteristics of the reporting, and the time-domain characteristics of the reporting comprise at least one of:

   a periodic reporting;
   a semi-static reporting; or
   an aperiodic triggered reporting.

5. The method according to claim 3, wherein the time-frequency domain characteristics of the reporting comprise frequency-domain characteristics of the reporting resource, and the frequency-domain characteristics of the reporting resource comprise:
a SubCarrier Spacing (SCS) of the reporting resource.

6. The method according to claim 3, wherein the time-frequency domain characteristics of the one or more measurement resources comprise at least one of:

the number of one or more associated measurement resources;
a frequency-domain distribution density of reference signals to be measured;
the number of antenna ports for the reference signals to be measured; or
a SubCarrier Spacing (SCS) associated with the configuration information.

7. The method according to claim 3, wherein the frequency-domain characteristics of the control signaling triggering the configuration information comprise:
a SCS of a channel on which the control signaling triggering the configuration information resides.

8. The method according to claim 2, wherein determining the occupancy time of the one or more processing units executing the at least one of AI or ML processing based on the configuration information related to the at least one of AI or ML processing comprises:

in response to a report quantity associated with the configuration information being not set to 'none', determining the occupancy time of the one or more processing units executing the at least one of AI or ML processing based on at least a reporting resource associated with the configuration information;
in response to the report quantity associated with the configuration information being set to 'none', determining the occupancy time of the one or more processing units executing the at least one of AI or ML processing based on a measurement resource associated with the configuration information.

9. The method according to claim 8, wherein determining the occupancy time of the one or more processing units executing the at least one of AI or ML processing based on at least the reporting resource associated with the configuration information, in response to the report quantity associated with the configuration information being not set to 'none', comprises:
in response to the report quantity associated with the configuration information being not set to 'none', determining the occupancy time of the one or more processing units executing the at least one of AI or ML processing based on a reporting type associated with the configuration information and the reporting resource associated with the configuration information.

10. The method according to claim 9, wherein determining the occupancy time of the one or more processing units executing the at least one of AI or ML processing based on the reporting type associated with the configuration information and the reporting resource associated with the configuration information, in response to the report quantity associated with the configuration information being not set to 'none', comprises at least one of:

in response to the configuration information being associated with a reporting and the reporting associated with the configuration information being a periodic reporting or a semi-static reporting, determining the occupancy time of the one or more processing units occupied by the at least one of AI or ML processing starting from a first symbol of the measurement resource associated with the configuration information, until a last symbol of the reporting resource; or
in response to the configuration information being associated with a reporting and the reporting associated with the configuration information being an aperiodic triggered reporting, determining the occupancy time of the one or more processing units occupied by the at least one of AI or ML processing starting from a first symbol after a trigger, until a last symbol of the reporting resource.

11. The method according to claim 9, wherein determining the occupancy time of the one or more processing units executing the at least one of AI or ML processing based on the measurement resource associated with the configuration information, in response to the report quantity associated with the configuration information being set to 'none', comprises:
in response to the report quantity associated with the configuration information being set to 'none', determining the occupancy time of the one or more processing units executing the at least one of AI or ML processing based on a processing latency and the measurement resource associated with the configuration information.

12. The method according to claim 11, wherein determining the occupancy time of the one or more processing units executing the at least one of AI or ML processing based on the processing latency and the measurement resource associated with the configuration information, in response to the configuration information being associated with not reporting, comprises at least one of:

in response to the report quantity associated with the configuration information being set to 'none' and the reporting associated with the configuration information being a periodic reporting or a semi-static reporting, determining the occupancy time of the one or more processing units executing the at least one of AI or ML processing starting from a first symbol of the measurement resource associated with the configuration information, until X symbols after a last symbol of the measurement resource, where X is a positive integer; or in response to the report quantity associated with the configuration information being set to 'none' and the reporting associated with the configuration information being an aperiodic triggered reporting, determining the occupancy time of the one or more processing units executing the at least one of AI or ML processing starting from a first symbol after a trigger, until a later one between M symbols after the trigger and N symbols after the last symbol of the measurement resource, where M and N are both positive integers.

13. The method according to any one of claims 1 to 12, wherein the configuration information comprises at least one of:

CSI resource configuration (CSI resource config) information; or
CSI report configuration (CSI report config) information.

14. An information processing apparatus, comprising:
a processing module configured to determine, based on configuration information related to at least one of Artificial Intelligence (AI) or Machine Learning (ML) processing, occupancy information of one or more processing units executing the at least one of AI or ML processing.

15. A communication device, comprising a processor, a transceiver, a memory, and an executable program stored in the memory and executable by the processor, wherein the processor is configured to perform the information processing method according to any one of claims 1 to 13 when executing the executable program.

16. A computer storage medium having an executable program stored thereon, wherein the executable program is configured to, when being executed by a processor, implement the information processing method according to any one of claims 1 to 13.

Fig. 1

S1110: determining occupancy information of processing unit(s) executing AI/ML processing based on configuration information related to AI/ML processing

Fig. 2A

S1210: determining occupancy number of processing unit(s) executing AI/ML processing based on configuration information related to AI/ML processing

Fig. 2B

S1310: determining, based on configuration information related to AI/ML processing, occupancy time of processing unit(s) executing AI/ML processing

Fig. 2C

network device

terminal

S1410: receiving configuration information

S1420: when configuration information is related to AI/ML processing, determining occupancy information of processing unit(s) executing AI/ML processing

S1430: when occupancy information indicates that processing unit(s) executing AI/ML processing has met preset condition, discarding configuration information related to AI/ML processing with lower priority

Fig. 2D

information processing apparatus

processing module  110

Fig. 3

Fig. 4

**900**

Fig. 5

## INTERNATIONAL SEARCH REPORT

| International application No. |
| --- |
| **PCT/CN2023/086735** |

### A. CLASSIFICATION OF SUBJECT MATTER

H04W 24/02(2009.01)i

According to International Patent Classification (IPC) or to both national classification and IPC

### B. FIELDS SEARCHED

Minimum documentation searched (classification system followed by classification symbols)

IPC: H04W, H04L, G06F

Documentation searched other than minimum documentation to the extent that such documents are included in the fields searched

Electronic data base consulted during the international search (name of data base and, where practicable, search terms used)

CNTXT, CJFD, ENTXT, 3GPP: AI, 人工智能, ML, 机器学习, 配置, 占用, 使用, 处理单元, CPU, 处理器, 上报, 测量, CSI, RS, 信道状态信息, 参考信号, Artificial Intelligence, Machine Learning, configurat+, occup+, us+, processing unit, processor, report+, measur+, channel state information, reference signal

### C. DOCUMENTS CONSIDERED TO BE RELEVANT

| Category* | Citation of document, with indication, where appropriate, of the relevant passages | Relevant to claim No. |
| --- | --- | --- |
| X | CN 111222046 A (TENCENT TECHNOLOGY (SHENZHEN) CO., LTD.) 02 June 2020 (2020-06-02) claims 1-15, and description, paragraphs 34-63 | 1-2, 14-16 |
| A | CN 111222046 A (TENCENT TECHNOLOGY (SHENZHEN) CO., LTD.) 02 June 2020 (2020-06-02) claims 1-15, and description, paragraphs 34-63 | 3-13 |
| A | US 2022338189 A1 (SAMSUNG ELECTRONICS CO., LTD.) 20 October 2022 (2022-10-20) entire document | 1-16 |
| A | CN 114826492 A (VIVO COMMUNICATION TECHNOLOGY CO., LTD.) 29 July 2022 (2022-07-29) entire document | 1-16 |
| A | CN 110971382 A (VIVO COMMUNICATION TECHNOLOGY CO., LTD.) 07 April 2020 (2020-04-07) entire document | 1-16 |

☐ Further documents are listed in the continuation of Box C. ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **07 December 2023** | **21 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
Information on patent family members

International application No.

**PCT/CN2023/086735**

| Patent document cited in search report | | | Publication date (day/month/year) | Patent family member(s) | | | Publication date (day/month/year) |
|---|---|---|---|---|---|---|---|
| CN | 111222046 | A | 02 June 2020 | None | | | |
| US | 2022338189 | A1 | 20 October 2022 | WO | 2022220642 | A1 | 20 October 2022 |
| CN | 114826492 | A | 29 July 2022 | None | | | |
| CN | 110971382 | A | 07 April 2020 | EP | 3860019 | A1 | 04 August 2021 |
| | | | | EP | 3860019 | A4 | 02 March 2022 |
| | | | | US | 2021218453 | A1 | 15 July 2021 |
| | | | | JP | 2022501967 | A | 06 January 2022 |
| | | | | JP | 7285920 | B2 | 02 June 2023 |
| | | | | SG | 11202103262 | PA | 29 April 2021 |
| | | | | KR | 20210065181 | A | 03 June 2021 |
| | | | | AU | 2019351179 | A1 | 27 May 2021 |
| | | | | AU | 2019351179 | B2 | 22 December 2022 |
| | | | | CA | 3114818 | A1 | 02 April 2020 |

Form PCT/ISA/210 (patent family annex) (July 2022)